# EUROPEAN PATENT APPLICATION

(11) **EP 3 453 508 A1**
(43) Date of publication of application: **13.03.2019**
(21) Application number: 18191319.5
(22) Date of filing: 28.08.2018
(51) Int. Cl.: B29B 7/60

(54) **EXTRUDER FEEDING ASSEMBLY AND EXTRUDER APPARATUS INCORPORATING IT**

(30) Priority: 06.09.2017 IT 201700099979
(71) Applicant: COLMEC S.p.A., 21052 Busto Arsizio (Varese) (IT)
(72) Inventor: COLOMBO, Marco, 21052 Busto Arsizio VA (IT)
(74) Representative: Faggioni, Carlo Maria

(57) **Abstract**

It is disclosed an extruding apparatus and relative feeding assembly, comprising hopper means in correspondence of an extruder-feeding area, wherein an extrusion screw (10) having a first rotation axis (X-X') and a drive roller (20) having a second rotation axis (Y-Y') are arranged at a distance each other so that a gap for raw material feeding is defined between said screw (10) and said drive roller (20), wherein said drive roller (20) has a substantially conical surface with respect to its own rotation axis (Y-Y'), said conical surface having a taper vertex facing toward a progression direction of said extrusion screw (10).

## Description

### FIELD OF THE INVENTION

The present invention relates to the field of extruders, especially those intended for rubber, silicone materials or, broadly, elastomer materials; more specifically, the invention relates to the extruder feeding system, comprising a feeding/conveying roller.

### TECHNICAL BACKGROUND

It is well known that in some types of screw extruders, notably in rubber, elastomer or silicone extruders, the material is fed to the extrusion screw through a loading/feeding hopper open towards the upper side.

Since these materials are typically fed to the hopper in the form of a semi-finished product, for example in the form of a 150 mm x 10 mm strip, it is necessary to take some precautions to follow through and guide the material to fit properly in the turns (spiral flights) of the screw. To this end, it is known to provide a feeding roller, having a smooth cylindrical surface, arranged alongside the extrusion screw and rotating (usually counter-rotating with respect to the screw) about an axis parallel to that of the screw, onto which the semi-finished material adheres and is dragged regularly between the turns of the screw.

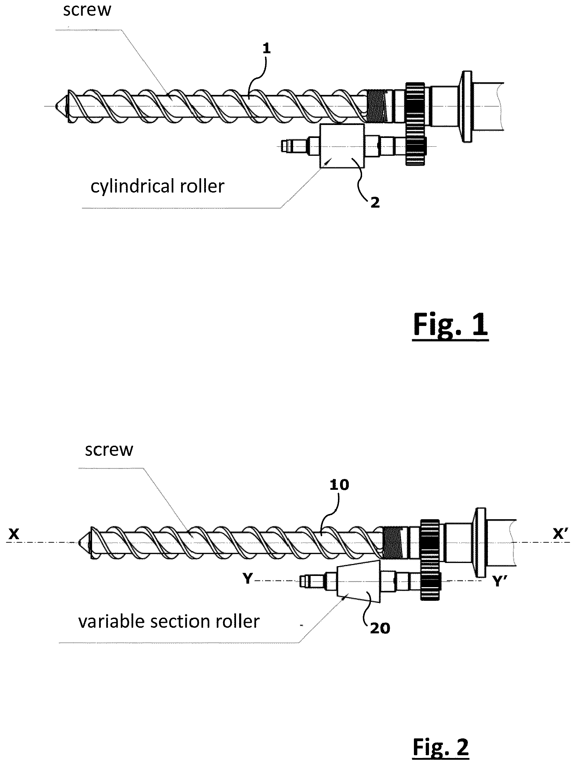

As shown in Fig. 1 - which illustrates a top plan view of a prior art system, without the extruder and hopper body - the cylindrical roller is driven in rotation with its peripheral cylindrical surface slightly spaced apart from the outer profile of the spiral flight of the extrusion screw. The rotation is controlled by a single gear system, which controls both the extrusion screw and the feeding roller.

However, it has been found that this arrangement has at least a couple of significant drawbacks.

First of all, the peripheral speed of the cylinder and the spiral flights of the extruder screw determines a combined action that pushes the incoming material towards the extruder mouth, *i.e.* in the area which is further downstream (in the direction of movement of the extruder screw) of the feeding hopper. The incoming material tends to accumulate in that forward position and, therefore, does not even end up filling homogeneously the channels between the spiral flights which are further upstream of the screw within the hopper. As a result, it is not possible to exploit the whole length of the screw, and the material is not introduced into the extruder in an optimal manner.

Secondly, the strip of semi-finished material, being in the area which is further downstream of the loading hopper, tends to be captured - even before undergoing at least a partial pressurization - by the overflowing material formed by the counter-pressure in the extruder body. This overflowing material is typically a mass of already compounded and pressurized material, which tends to go back to the low-pressure area of the extruder (forming a sort of larger or smaller ball made of plastic material) to accommodate the filling variations of the extruder during the extrusion. If the semi-finished material is incorporated directly into the overflowing material, inhomogeneous inclusions tend to form in the material which is finally extruded.

Currently, to overcome these drawbacks, it is necessary to rely on the skill of the operator who manually controls the introduction of material into the hopper, for example by exerting a variable traction on the strip of rubber material being fed, such as to dose the material inlet (thus reducing the overflowing material) and, especially, by pushing the incoming strip of material towards the area upstream of the hopper, so as to have the upstream channels between the flights of the screw better filled with material.

Other automatic solutions offered by the prior art imply either complex structures or different extruder arrangements operating in a different way which is incompatible with rubber or silicon-based materials. For example, CN102582059, DE879861 and US2002/36948 disclose twin-screw extruder arrangements, with a couple of screws intermeshing each other: the presence of flights on both the intermeshing screws allows to rise the material pressure within the extruder but doesn't solve any of the technical problems depicted above. Other extruder arrangement are known from WO2015/154272, US3744770, CN201970460U, EP489293 and DE6047C.

### SUMMARY OF THE INVENTION

The problem underlying the invention is to propose an extruder device, especially one intended for rubber and silicone-based materials, which overcomes the aforementioned drawbacks and which allows a more regular feeding of the semi-finished material even without the intervention of a skilled operator.

This object is achieved by the features mentioned in claim 1. The dependent claims describe preferred features of the invention.

In particular, according to a first aspect of the invention, it is provided a feeding assembly of an extruder, comprising hopper means in correspondence of an extruder-feeding area, wherein an extrusion screw having a first rotation axis and a drive roller having a second rotation axis are arranged at a distance each other so that a gap for raw material feeding is defined between a flight envelope of said screw and said drive roller, wherein said drive roller has a substantially smooth conical surface with respect to its own rotation axis, said conical surface having a taper vertex facing toward a progression direction of said extrusion screw.

Preferably, the taper ratio of said substantially conical surface is comprised between about 0.1° and about 30°, preferably between about 0.5° and about 5°. According to a different view, the taper ratio of said substantially conical surface is such that the difference between the minimum and maximum peripheral linear velocity on said surface, upon rotation about said second rotation axis, is comprised between 0.1% and 50%.

Said substantially conical surface can be determined by a curved generating line.

According to another aspect, it is provided an apparatus for the extrusion of rubber-based or silicon-based material, comprising at least an extrusion screw and a drive roller, mounted side by side in a feeding area of semi-processed material, wherein the feeding area is provided with a feeding assembly as above.

In a variant, the second rotation axis of the drive roller is substantially parallel to the first rotation axis of the screw.

In another variant, the second rotation axis is converging with respect to the first rotation axis of said screw with an angle smaller than 30°.

Preferably, the drive roller is driven into rotation by a drive independent from the motor driving the extrusion screw.

### BRIEF DESCRIPTION OF THE DRAWINGS

Further features and advantages of the invention will anyhow be more evident from the following detailed description of a preferred embodiment, given by way of nonlimiting example and illustrated in the accompanying drawings, wherein:
Fig. 1, as anticipated, is a schematic view of a prior art extruder system;
Fig. 2 is a schematic view similar to that in Fig. 1, yet concerning a feeding system according to the invention;
Fig. 3 is an enlarged view of the detail of the drive roller of the system of Fig. 2;
Fig. 4 is a schematic view comparing the operation of the system of the invention to a prior art system.

### DETAILED DESCRIPTION OF THE PREFERRED EMBODIMENT

For a better understanding of the invention, reference is firstly made to Fig. 1, where a prior art extruder is outlined, having an extrusion screw 1 by whose side a feeding or drive roller 2 is placed. The figure does not show neither the extruder body/barrel, in which the screw 1 is housed, nor the hopper compartment, usually placed above the roller 2, as they are well known to those skilled in the art and do not require further description.

The drive roller 2 of the prior art is cylindrical, with a rotation axis parallel to the axis of the screw 1 and placed closely alongside to the helical outline of the screw 1. A single motor drives the screw 1 and the drive roller 2 by means of gears 3, whose transmission ratios allow a synchronized rotation of the drive roller 2 and of the screw 1.

Referring now to Fig. 2, according to the invention, it is suggested to provide an extruder screw 10 with a feeding or drive roller 20 having a smooth conical surface with respect to the rotation axis.

Therefore, according to a preferred embodiment, the drive roller 20 is in the form of a truncated conical body, mounted in rotation about its own longitudinal symmetry axis.

More precisely, the truncated conical drive roller 20 has its minor base facing forward, *i.e.,* towards the downstream direction in which the extruded material moves within the screw 10, while the major base of the drive roller 20 is directed towards the rear end, *i.e.,* towards the upstream direction. In other words, the taper vertex of the roller 20 faces towards the progression direction of the extruder screw 10.

With 'smooth surface' of the conical roller it is meant that the surface of the drive roller 20 is substantially free of any projection or flight which could prevent the material from shifting from one end to the other along the length of the roller.

In the embodiment shown in Fig. 2, the rotation axis Y-Y' of the conical drive roller 20 is parallel to the rotation axis X-X' of the respective extruder screw 10 and the two axes X-X' and Y-Y' are arranged at a mutual distance such that the drive roller 20 lateral surface is adjacent to the flight envelope of the screw 10 only at its major base, for example at a relative distance in the range of 2 mm to 15 mm. Thus, between the helical profile (flight envelope) of the screw 10 and the conical lateral surface of the drive roller 20, a gap is formed which increases starting from the major base towards the minor base of the drive roller 20.

The taper of the drive roller is 0.1° to about 30°, preferably in the range of 0.5° to 5°.

According to another aspect, the arrangement of the drive roller 20 is such that the difference between the minimum and maximum peripheral linear velocity on the surface thereof, in the rotation about its own rotation axis Y-Y', is comprised between 0.1% and 50%.

This innovative arrangement has proved extremely effective in providing a solution to the problems existing in the prior art. The relative different speeds between the drive roller 20 lateral surface and the extruder screw 10 flights along the longitudinal extension of the roller, together with the fact that the gap between the screw 10 and the drive roller 20 enlarges downstream, result in a perfect filling of the channels between flights of the screw 10 with the material to be extruded and strongly reduce any problem of inclusion of the material being fed into the overflowing material.

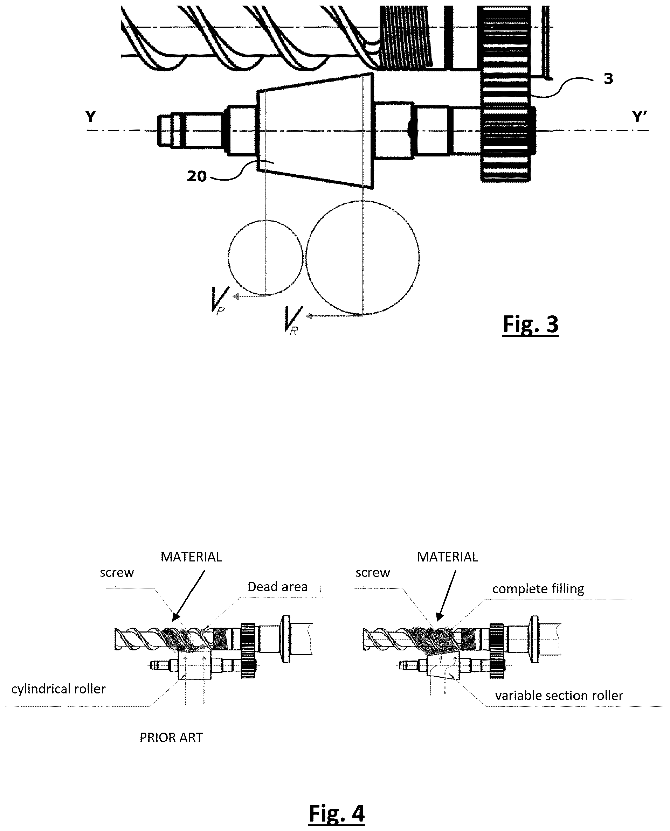

Such advantageous results are believed to result mainly from the speed profile along the variable-section roller, as outlined in the detailed view of Fig. 3. It can be easily understood that, with a given rotation speed of the drive roller 20, a linear peripheral speed V_{R} at the major base and a linear peripheral speed V_{P} at the minor base are obtained, such that V_{R} > V_{P}. Such difference between the peripheral speeds on the drive roller cause the incoming material into the hopper, which adheres to the surface of the roller 20, to naturally move from the lower speed area to the higher speed area.

This axial driving action, in an upstream direction, tends to lead the material towards the spiral flights of the screw 10 which are further upstream (which is a dead area for the material, in the prior art), facilitating the perfect filling of all the channels between flights of the screw 10. In addition, the dragging effect upstream prevents the incoming material from interacting with the overflowing material which, by contrast, is in the area which is further downstream of the hopper.

This advantageous effect is also shown in Fig. 4 in comparison to the behaviour of the prior art arrangements.

The drive roller 20 can be made of metallic materials, whether ferrous or non-ferrous, be solid or hollow, and possibly provided with thermal adjustment means.

The control of rotation of the drive roller 20 can be made either in a traditional way by direct coupling, by means of gears, with the extruder screw 10 (as shown in Fig. 3), or it may occur by coupling with the same motor-reducer actuating the screw 10 or, still, through independent drive unbound from the rotation speed of the extruder screw.

Preferably, a cleaning blade or doctor blade (not shown in figures), intended to maintain the surface of the drive roller 20 clean during its rotation, is associated with the roller 20. The positioning of the blade can be fixed or movable in order to stay in contact (or nearly in contact) with the lateral surface of the roller.

According to one alternative embodiment, not shown in the drawings, the drive roller 20 has a rotation axis Y-Y' not perfectly parallel, but inclined, *e.g.* in the range of 0.1° to 30°, with respect to the rotation axis X-X' of the screw 10.

According to another variant, also not shown in the drawings, the geometry of the drive roller 20 is not strictly truncated conical, but the generating line of the rotation solid of the roller 20 is a curved one, *e.g.,* elliptical or parabolic, arranged with a general overall taper ratio with respect to the rotation axis (*i.e.,* the line connecting the two furthest points of the generating curve is tilted with respect to the rotation axis Y-Y').

As can be understood from the above disclosure, the solution provided by the invention perfectly achieves the purposes stated in the introduction. Indeed, the drive roller of the invention draws the semi-finished material at the entrance of the hopper towards the area upstream of the loading area, which ensures a perfect filling of the channels between flights of the extruder screw 10, as well as minimizes the possibility that the raw material being fed into the hopper comes into contact with the overflowing material formed in the area downstream of the feeding area.

It has also been experienced that this mode of material feeding, directly in the area upstream of the extruder screw 10, makes it easier to find an optimum rotation speed of the drive roller 20 which produces a self-regulated feeding, so that the operator is no longer forced to continuously correct the dragging action on the incoming material.

It is understood, however, that the invention is not to be considered as limited to the particular arrangement illustrated above, which represent only exemplary embodiments of the same, but different variants are possible, all within the reach of a person skilled in the art, without departing from the scope of the invention itself, as defined by the following claims.
In particular, it should be noted that in the description reference has always been made to material fed in the form of strips, but the system of the invention is certainly also suitable for being fed with material in other forms, *e.g.,* in grains.

## Claims

1. Feeding assembly of an extruder, comprising hopper means in correspondence of an extruder-feeding area, wherein an extrusion screw (10) having a first rotation axis (X-X') and a drive roller (20) having a second rotation axis (Y-Y') are arranged at a distance each other so that a gap for raw material feeding is defined between a flight envelope of said screw (10) and said drive roller (20), **characterised in that**
said drive roller (20) has a substantially smooth conical surface with respect to its own rotation axis (Y-Y'), said conical surface having a taper vertex facing toward a progression direction of said extrusion screw (10).

2. Feeding assembly as in 1, wherein the taper of said substantially conical surface is comprised between about 0.1° and about 30°, preferably between about 0.5° and about 5°.

3. Feeding assembly as in 1 or 2, wherein the taper of said substantially conical surface is such that the difference between the minimum and maximum peripheral linear velocity on said surface, upon rotation about said second rotation axis (Y-Y'), is comprised between 0.1% and 50%.

4. Feeding assembly as in 1, 2 or 3, wherein said substantially conical surface is determined by a curved generating line.

5. Apparatus for the extrusion of rubber-based or silicon-based material, comprising at least an extrusion screw (10) and a drive roller (20), mounted side by side in a feeding area of semi-processed material, **characterised in that**
said feeding area is provided with a feeding assembly as in any one of the preceding claims.

6. Extrusion apparatus as in 5, wherein said second rotation axis (Y-Y') of the drive roller (20) is substantially parallel to said first rotation axis (X-X') of said screw (10).

7. Extrusion apparatus as in 5, **characterised in that** said second rotation axis (Y-Y') is converging with respect to the first rotation axis (X-X') of said screw (10) with an angle smaller than 30°.

8. Extrusion apparatus as in 5, 6 or 7, wherein said drive roller (20) is driven into rotation by a drive independent from the motor driving the extrusion screw (10).
